# EUROPÄISCHE PATENTANMELDUNG

(11) **EP 0 884 131 A2**
(43) Veröffentlichungstag der Anmeldung: **16.12.1998**
(21) Anmeldenummer: 98110662.8
(22) Anmeldetag: 10.06.1998
(51) Int. Cl.: B23Q 3/00, B23Q 3/16

(54) **Vorrichtung zur Verschraubung von einem Beschlagteil mit einem Flügelrahmen**

(30) Priorität: 12.06.1997 DE 19724706
(71) Anmelder: Wegoma GmbH Maschinenfabrik in Konkurs, 75015 Bretten (DE)
(72) Erfinder: Erbacher, Johannes, 75217 Birkenfeld (DE)
(74) Vertreter: Lindner, Michael, Dipl.-Ing.

(57) **Zusammenfassung**

Die Erfindung betrifft eine Vorrichtung zur Verschraubung von zumindest einem Beschlagteil mit einem Flügelrahmen (18) eines Fensters, einer Tür oder dergleichen, mit einem Auflagetisch (19), mit einem linear zum Auflagetisch verlagerbaren, eine Schraubendrehereinheit (60) aufweisenden Schraubschlitten (6), wobei die Schraubendrehereinheit (60) relativ zum Schraubschlitten (6) verlagerbar ist, und mit einer den Flügelrahmen (18) spannenden Spannvorrichtung (5). Die Vorrichtung zeichnet sich dadurch aus, daß die Spannvorrichtung (5) dem Schraubschlitten (6) zugeordnet ist.

## Beschreibung

Die Erfindung betrifft eine Vorrichtung zur Verschraubung von zumindest einem Beschlagteil mit einem Flügelrahmen eines Fensters, einer Tür oder dergleichen, mit einem Auflagetisch, mit einem linear zum Auflagetisch verlagerbaren eine Schraubendrehereinheit aufweisenden Schraubschlitten, wobei die Schraubendrehereinheit relativ zum Schraubschlitten verlagerbar ist, und mit einer den Flügelrahmen spannenden Spannvorrichtung.

Eine Vorrichtung der eingangs genannten Art ist bekannt. Sie weist einen Auflagetisch auf, auf den der Flügelrahmen beispielsweise eines Fensters aufgelegt werden kann. In den Flügelrahmen werden die Beschlagteile manuell eingesetzt. Auf einer Tragschiene ist ein verlagerbarer Schraubschlitten mit einer Schraubendrehereinheit angeordnet. Ferner ist eine Spannvorrichtung vorgesehen, die den Flügelrahmen gegen einen Anschlag festspannt. Der Schraubschlitten fährt auf der Tragschiene unter Zuhilfenahme vorgegebener Maße Bohrlöcher am Beschlagteil an, und die Schraubendrehereinheit schraubt im Beschlagteil vorher eingesetzte Schrauben zur Befestigung des Beschlagteils in den Flügelrahmen ein. Nachdem eine Seite des Flügelrahmens mit dem Beschlagteil verschraubt wurde, wird die Spannvorrichtung gelöst und der Flügelrahmen mit einer separaten Einrichtung auf dem Auflagetisch gedreht, so daß das nächste Beschlagteil mit einer anderen Seite des Flügelrahmens verschraubt werden kann. Nachfolgend wird die dritte und vierte Seite des Flügelrahmens mit dem Beschlagteil verschraubt. Der fertig beschlagene Flügelrahmen wird dann von Hand von dem Auflagetisch abgenommen und auf einen Ablegetisch gelegt, so daß ein weiterer Flügelrahmen beschlagen werden kann.

Nachteilig ist, daß die eingesetzte Spannvorrichtung, die dem Auflagetisch zugeordnet ist, und als Bandzylinder ausgeführt ist, erhebliche Ausmaße aufweist und zudem vergleichsweise teuer ist.

Ferner ist nachteilig, daß jeweils lediglich eine Seite des Flügelrahmens automatisch beschlagen werden kann. Um die nächste Seite des Flügelrahmens automatisch mit einem Beschlag zu verschrauben, muß eine zeitaufwendige Drehung des Flügelrahmens durchgeführt werden.

Schließlich ist im Stand der Technik nachteilig, daß eine zwei Arbeitsstationen umfassende Vorrichtung eine separate Transporteinrichtung benötigt, deren Transportweg auf die Größe des Flügelrahmens im einzelnen abgestimmt werden muß, so daß auch hier Umrüstarbeiten an der Vorrichtung vorgenommen werden müssen.

Die der Erfindung zugrunde liegende Aufgabe besteht darin, eine Vorrichtung zur Verschraubung der eingangs genannten Art so weiterzubilden, daß die genannten Nachteile vermieden werden. Insbesondere soll die Vorrichtung mit geringen Umrüstzeiten betrieben werden können.

Die der Erfindung zugrunde liegende Aufgabe wird durch eine Vorrichtung der eingangs genannten Art gelöst, bei der die Spannvorrichtung dem Schraubschlitten zugeordnet ist.

Dadurch, daß die Spannvorrichtung dem Schraubschlitten zugeordnet ist, ist es in vorteilhafter Weise möglich, bei der Verlagerung des Schraubschlittens auf einer Tragschiene der erfindungsgemäßen Vorrichtung die Spannvorrichtung mit zu verlagern, so daß keine zeitaufwendigen Umrüstarbeiten an der Verschraubvorrichtung notwendig sind. Da der Schraubschlitten zur Verschraubung der Beschlagteile mit dem Flügelrahmen ohnehin verlagert werden muß, kann die dem Schraubschlitten zugeordnete Spannvorrichtung in vorteilhafter Weise mitbewegt werden.

In einer Weiterbildung der Erfindung ist vorgesehen, daß der Schraubschlitten aus zwei miteinander koppelbaren Einzelschlitten aufgebaut ist, von denen einer eine spannende Funktion und der andere eine verschraubende Funktion hat. Es ist somit möglich, mit dem die zwei zusammengekoppelten Einzelschlitten aufweisenden Schraubschlitten die Position anzufahren, die vorgesehen ist, um die Spannvorrichtung für die geforderte Flügelrahmengröße anzubringen. Ist diese Position erreicht, werden die beiden Einzelschlitten entkoppelt, so daß der die spannende Funktion ausübende Einzelschlitten, der gleichsam die Spannvorrichtung darstellt, an der angefahrenen Position verharrt und der zweite Einzelschlitten, der die Schraubendrehereinheit aufweist, die vorgegebenen Bohrungen des Beschlagteils anfahren und mit Hilfe der Schraubendrehereinheit das Beschlagteil mit dem Flügelrahmen verschrauben kann. Nachdem die Verschraubung des Beschlagteils beendet ist, fährt der die Schraubendrehereinheit aufweisende Einzelschlitten zum anderen Einzelschlitten, wobei dieser wieder angekoppelt wird, so daß die Spannvorrichtung wieder verlagert werden kann.

In einer besonders bevorzugten Ausführung ist vorgesehen, daß ein weiterer Schraubschlitten, ebenfalls bestehend aus zwei koppelbaren Einzelschlitten, vorgesehen ist, wobei in einer vorteilhaften Weiterbildung der Erfindung vorgesehen ist, daß der zweite Schraubschlitten im wesentlichen rechtwinklig zur Verlagerungsrichtung des ersten Schraubschlittens relativ zum Auflagetisch verlagerbar ist, so daß gleichzeitig ein zweites Beschlagteil mit dem Flügelrahmen verschraubbar ist. Die erfindungsgemäße Vorrichtung weist demgemäß vorteilhafterweise zwei rechtwinklig zueinander angeordnete Tragschienen für die beiden Schraubschlitten auf. Dadurch wird es in besonders vorteilhafter Weise möglich, ein zweites Beschlagteil mit dem Flügelrahmen zu verschrauben, wobei auf zumindest einen zeitaufwendigen Drehvorgang des Flügelrahmens verzichtet werden kann. Dadurch, daß auch der zweite Schraubschlitten aus zwei koppelbaren Einzelschlitten aufgebaut ist, kann der Flügelrahmen in vorteilhafter Weise mit zwei Spannvorrichtungen gegen einen vorteilhafterweise an der erfindungsgemäßen Vorrichtung vorhandenen Anschlag am Auflagetisch der erfindungsgemäßen Vorrichtung gedrückt werden, so daß eine sichere Fixierung des Flügelrahmens während der Verschraubung des Beschlags beziehungsweise der Beschläge gewährleistet ist.

Die der Erfindung zugrunde liegende Aufgabe wird auch von einer Vorrichtung zur Verschraubung von zumindest einem Beschlagteil mit einem Flügelrahmen gelöst, wobei die Vorrichtung zwei Arbeitsstationen und eine Transporteinrichtung zum Verlagern des Flügelrahmens von der ersten Arbeitsstation zur zweiten Arbeitsstation aufweist.

Es ist also eine Vorrichtung vorgesehen zur Verschraubung von zumindest einem Beschlagteil mit einem Flügelrahmen eines Fensters, einer Tür oder dergleichen, mit einem Auflagetisch, mit einem linear zum Auflagetisch verlagerbaren, eine Schraubendrehereinheit aufweisenden Schraubschlitten, wobei die Schraubendrehereinheit relativ zum Schraubschlitten verlagerbar ist, und mit einer den Flügelrahmen spannenden Spannvorrichtung, wobei die Vorrichtung mindestens zwei Arbeitsstationen und vorzugsweise mindestens eine Transporteinrichtung zum Verlagern des Flügelrahmens von der ersten Station zur zweiten Station aufweist. In einer besonders bevorzugten Ausführungsform der Erfindung ist vorgesehen, die vorgenannte Vorrichtung so auszuführen, daß die Transporteinrichtung dem Schraubschlitten zugeordnet ist. Die Transporteinrichtung kann einstückig mit dem Schraubschlitten ausgeführt oder an diesem koppelbar oder nicht koppelbar befestigt sein. Dadurch, daß der Schraubschlitten bereits verlagerbar ausgeführt ist, kann der Transport mit dem Schraubschlitten ausgeführt werden. Es werden also keine zusätzlichen Fördereinrichtungen benötigt. Sind beispielsweise beide Arbeitsstationen als Schraubstationen ausgeführt, so können an der ersten Arbeitsstation zwei Beschlagteile mit dem Flügelrahmen verschraubt werden, anschließend ist es mit dem Schraubschlitten möglich, den Flügelrahmen auf die zweite Arbeitsstation zu verlagern, so daß ohne eine Drehung des Flügelrahmens die beiden anderen Beschlagteile verschraubt werden können. Es kann somit in kurzer Zeit ein Flügelrahmen komplett beschlagen werden, so daß sich die Gesamtproduktionskosten reduzieren lassen.

Schließlich wird die der Erfindung zugrunde liegende Aufgabe von einer Vorrichtung der eingangs genannten Art gelöst, die sich dadurch auszeichnet, daß eine Einrichtung zur Montage eines Eckbands vorgesehen ist, die dem Schraubschlitten zugeordnet ist, beispielsweise mit diesem einstückig ausgeführt ist oder koppelbar oder nicht koppelbar an diesem befestigt ist. Ein Eckband ist beispielsweise ein Scharnierteil, das mit einem anderen Scharnierteil an einem Blendrahmen zusammenwirkt, so daß der Flügelrahmen schwenkbeweglich ist, das heißt, daß das Fenster geöffnet werden kann. Es ist also vorgesehen, nachdem ein Schraubschlitten ein Beschlagteil mit dem Flügelrahmen verschraubt hat, einen weiteren Montageschritt auszuführen. Beispielsweise ist die Schraubendrehereinheit derart verlagerbar, daß mit ihr auch das Eckband verschraubt werden kann. Vorzugsweise kann vorgesehen sein, daß auch eine Bohreinheit auf dem Schraubschlitten angebracht ist, die vorzugsweise den Flügelrahmen mit Bohrlöchern versieht, so daß das Eckband anschließend mit dem Flügelrahmen auf einfache Art und Weise verschraubt werden kann. Letztlich kann vorgesehen sein, daß der Einrichtung zur Montage eines Eckbands ein Eckbandmagazin zugeordnet ist, das dem Schraubschlitten ein Eckband zuführt, so daß dieses anschließend mit der Einrichtung zur Montage des Eckbands am Flügelrahmen befestigt werden kann. Dadurch wird es möglich, daß ein Flügelrahmen komplett auf einer Maschine beschlagen werden kann.

Selbstverständlich betrifft die Erfindung auch Kombinationen der vorgenannten Vorrichtungen und Verfahren, beispielsweise Vorrichtungen zum Verschrauben von Beschlagteilen mit Flügelrahmen, die zum Beispiel zweiteilige, aus koppelbaren Einzelschlitten aufgebaute Schraubschlitten aufweisen, denen, insbesondere dem die Schraubendrehereinheit aufweisenden Einzelschlitten, eine Einrichtung zur Montage eines Eckbands und/oder eine Transporteinrichtung zum Befördern eines Flügelrahmens von einer Arbeitsstation zu einer anderen zugeordnet ist.

Die Erfindung wird nun anhand eines Ausführungsbeispiels mit Bezug auf die Zeichnung näher erläutert. Dabei zeigen:
- Figur 1: einen Schraubschlitten mit Spannvorrichtung,
- Figur 2: den Schraubschlitten gemäß Figur 1 mit abgekoppelter Spannvorrichtung,
- Figur 3: eine Verklemmeinrichtung des Schraubschlittens,
- Figur 4: eine schematische Schnittdarstellung einer Tragschiene,
- Figuren 5 bis 9: eine Vorrichtung zur Verschraubung von Beschlagteilen mit einem Flügelrahmen eines Fensters, wobei mehrere Positionen von zu bearbeitenden Flügelrahmen auf Auflagetischen dargestellt sind.

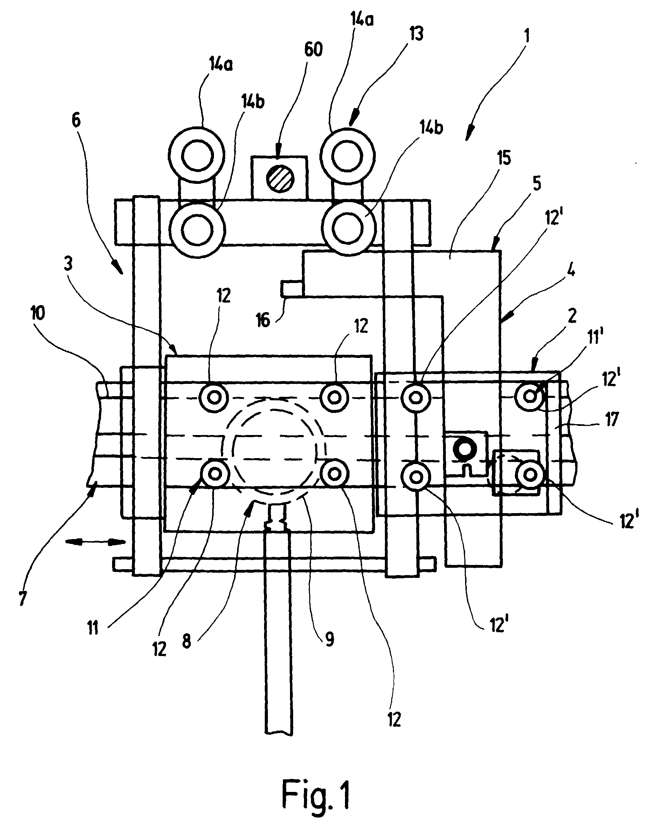

Die Figur 1 zeigt einen Kombinationsschlitten, im folgenden nur noch Kombischlitten 1 genannt, der zwei miteinander verkoppelbare Einzelschlitten 2 und 3 umfaßt. Der Einzelschlitten 2 bildet einen Spannschlitten 4, der eine Spannvorrichtung 5 aufweist; der Einzelschlitten 3 ist als Schraubschlitten 6 ausgebildet, der zumindest eine nur schematisch angedeutete Schraubendrehereinheit 60 trägt.

Der Kombischlitten 1 ist auf einer Tragschiene 7 verlagerbar angeordnet, wobei eine Antriebseinrichtung 8 mit der Tragschiene 7 zusammenwirkt, so daß der Kombischlitten 1 - wie bereits erwähnt - auf der Tragschiene 7 verlagerbar ist. Beispielsweise ist ein mit dem Kombischlitten 1 verbundenes Zahnrad 9 angetrieben, das mit einer an der Tragschiene 7 angebrachten Zahnstange 10 kämmt. Alternativ kann auch eine Antriebseinrichtung vorgesehen sein, die Reibschlußelemente (nicht dargestellt) aufweist.

Dem Schraubschlitten 6 ist eine Führungseinrichtung 11 zugeordnet, die vorzugsweise vier als Rollen ausgebildete Führungselemente 12 aufweist, die mit der Tragschiene 7 die Führung bilden.

Weiterhin umfaßt der Schraubschlitten 6 in bevorzugter Weise ein Spannsystem 13, das vorteilhafterweise in der Höhe und seitlich, das heißt vorzugsweise parallel und senkrecht zur Blattebene verlagerbar auf dem Schraubschlitten 6 angeordnet ist und als Transporteinrichtung für einen Flügelrahmen dient. Das Spannsystem 13 weist vorzugsweise vier Spannrollen 14 auf, wobei die beiden in der Figur 1 oben liegenden Spannrollen 14a relativ zu den beiden anderen Spannrollen 14b quer zur Längsrichtung der Tragschiene 7 verstellbar sind. Damit läßt sich ein zwischen den beiden Spannrollenpaaren liegender Rahmenteil festklemmen. Die Spannrollen können mit Kunststoff beschichtet sein. Das Spannsystem 13 kann, muß aber nicht dem Kombischlitten 1 zugeordnet sein. Das Spannsystem 13 ist vielmehr optional vorzusehen und kann selbstverständlich auch erfindungsgemäß einer herkömmlichen Vorrichtung zum Verschrauben von Beschlagteilen mit Flügelrahmen zugeordnet sein, insbesondere einem herkömmlichen, nicht koppelbaren Schraubschlitten.

Zusätzlich kann der Schraubschlitten 6 eine Befestigungsmittelzufuhreinrichtung aufweisen, die dazu dient, der Schraubendrehereinheit 60 vorzugsweise Schrauben zuzuführen. Die Erfindung sieht auch vor, dem Kombischlitten 1 oder einem beliebigen herkömmlichen Schraubschlitten eine Einrichtung zur Montage eines Eckbands zuzuordnen.

Der Spannschlitten 4 umfaßt eine Führungseinrichtung 11', die als Rollen ausgebildete Führungselemente 12' aufweist, die der Führung des Spannschlittens 6 auf der Tragschiene 7 dienen. Die Spannvorrichtung 5 des Spannschlittens 4 umfaßt vorzugsweise einen Spannarm 15, der hier teilweise in den Schraubschlitten 6 hineinragt. Am Spannarm 15 ist ein Spannfinger 16 angebracht, alternativ ist es auch möglich, den Spannarm 15 und den Spannfinger 16 einstückig auszubilden. Der Spannarm 15 ist vorzugsweise auf einem Rahmen 17 des Spannschlittens 4 angeordnet. Der Spannarm 15 und/oder der Spannfinger 16 sind gegenüber dem Rahmen 17 in ihrer Höhe, das heißt senkrecht zur Blattebene, verlagerbar. Der Rahmen 17 trägt also die Spannvorrichtung 5 und die Führungseinrichtung 11'.

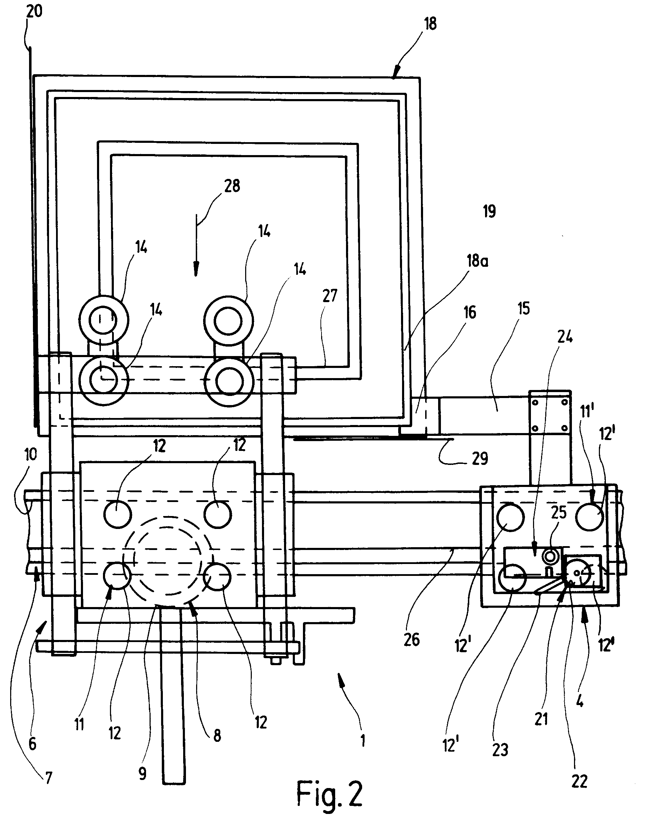

In Figur 2 ist der Kombischlitten 1 in entkoppelter Position dargestellt, das heißt, der Spannschlitten 4 ist vom Schraubschlitten 6 entkoppelt. Gleiche Teile - wie in Figur 1 - sind mit denselben Bezugszeichen gekennzeichnet, insofern kann auf die zugehörigen Beschreibungsteile verwiesen werden.

Weiterhin ist in Figur 2 ein Flügelrahmen 18 dargestellt, der hier rein beispielhaft als Fensterrahmen angenommen wird. Der Flügelrahmen 18 liegt auf einem Auflagetisch 19 und wird an einem Rahmenteil 18a vom Spannfinger 16 gegen einen Anschlag 20 gedrängt. Der Anschlag 20 ist vorzugsweise gegenüber dem Auflagetisch 19 absenk- und anhebbar.

Der Spannschlitten 4 weist eine Verklemmeinrichtung 21 auf. Die Verklemmeinrichtung 21 umfaßt vorzugsweise einen drehbar gelagerten Exzenter 22, an dem ein Betätigungshebel 23 angelenkt ist. Der Exzenter 22 wirkt mit einer Klemmvorrichtung 24 zusammen, in der ein Zahnrad 25 drehbar gelagert ist. Das Zahnrad 25 wirkt mit einer Zahnstange 26 zusammen, die der Tragschiene 7 zugeordnet ist. Natürlich kann die Klemmvorrichtung 24 so angeordnet sein, daß sie mit der Zahnstange 10 zusammenwirkt. Der Betätigungshebel 23 der Verklemmeinrichtung 21 wird über eine Betätigungseinrichtung (nicht dargestellt) betätigt, die dem Schraubschlitten 6 zugeordnet ist. Die Betätigungseinrichtung wird vorzugsweise durch eine Kolben/Zylindereinheit gebildet. Die Betätigungseinrichtung dient dazu, nachdem eine vorgegebene Position von dem Kombischlitten 1 angefahren wurde, die Verklemmeinrichtung 21 zu betätigen. Dabei wirkt der Exzenter 22 mit der Klemmvorrichtung 24 zusammen, so daß das Zahnrad 25 in der Klemmvorrichtung 24 festgeklemmt wird. Dadurch ist eine mechanische Blockierung des Zahnrads 25 gegenüber der Zahnstange 26 realisiert. Anschließend wird über eine Verriegelungseinrichtung (nicht dargestellt) der Spannschlitten 4 vom Schraubschlitten 6 abgekoppelt, so daß der Spannschlitten 4 in seiner festgeklemmten Position verharrt und der Schraubschlitten 6 zur Verschraubung eines Beschlags (nicht dargestellt) mit dem Flügelrahmen 18 verschiedene Positionen anfahren kann. Bei der Verschraubung wirkt das Spannsystem 13 derart mit dem Flügelrahmen 18 zusammen, daß zumindest eine Spannrolle 14 an der Rahmeninnenseite 27 anliegt und eine Kraftwirkung in Pfeilrichtung 28 ausübt. Das Spannsystem 13 dient somit als Widerlager, wenn die Schraubendrehereinheit eine Schraube in den Flügelrahmen 18 eindreht. Vorzugsweise ist ein weiterer Anschlag 29 am Auflagetisch 19 vorgesehen, gegen den der Flügelrahmen 18 mit Hilfe des Spannsystems 13 gedrängt werden kann.

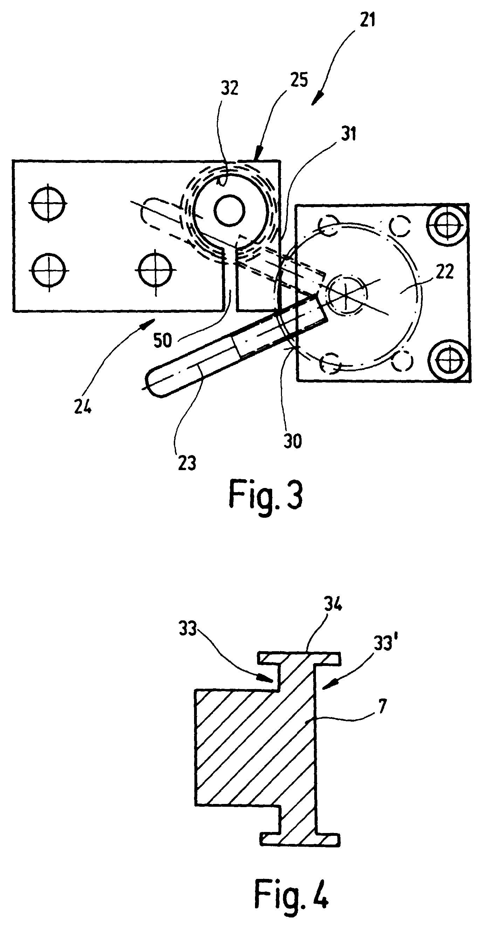

In Figur 3 ist die Verklemmeinrichtung 21 des Spannschlittens 4 vergrößert dargestellt. Gleiche Teile - wie in Figur 2 dargestellt - sind mit denselben Bezugszeichen versehen, so daß auf die zugehörigen Beschreibungsteile verwiesen werden kann.

Anhand der Figur 3 wird nun die Arretierung des Spannschlittens 4 auf der Tragschiene 7 näher erläutert: Soll der Spannschlitten 4 vom Schraubschlitten 6 abgekoppelt werden, so betätigt die Betätigungseinrichtung den Betätigungshebel 23, worauf der Exzenter 22 bezüglich der Klemmvorrichtung 24 verdreht wird. Dabei drückt der Exzenter 22 mit seiner Außenfläche 30 auf einen Seitenbereich 31 der Klemmvorrichtung 24. Die Klemmvorrichtung 24 weist einen Schlitz 50 auf, so daß der Exzenter 22 die Klemmvorrichtung im Bereich des Schlitzes 50 derart betätigt, daß ein Zahnrad 25 in seinem Lager 32 festgeklemmt wird. Der Betätigungshebel 23 wird dabei in eine strichpunktiert dargestellte Position durch die Betätigungseinrichtung verschwenkt, bis eine Selbsthaltung des Exzenters 22 auftritt. Das heißt, der Exzenter 22 kann sich nicht selbständig lösen, so daß bei einer Ankopplung des Schraubschlittens 6 an den Spannschlitten 4 die Verklemmung des Zahnrads 25 zwangsweise gelöst werden muß. Es ist also ohne weiteres erkennbar, daß der Kombischlitten 1 aus den zwei Einzelschlitten 2 und 3 gebildet wird, die voneinander an- und abkoppelbar sind. Ist der Spannschlitten 4 abgekoppelt, weist er keine Antriebseinrichtung auf, jedoch ist es gewährleistet, daß er mit Hilfe der Verklemmeinrichtung 21 in seiner Position arretiert werden kann. Dadurch kann einerseits der Flügelrahmen 18 festgespannt werden. Andererseits kann der Schraubschlitten entlang des Flügelrahmens verfahren werden, wobei die Schraubendrehereinheit den Beschlag mit dem Flügelrahmen 18 verschraubt.

Vorzugsweise werden alle Funktionen des Kombischlittens 1 von einer Steuerung aktiviert, die elektrisch, pneumatisch oder hydraulisch arbeitet, wobei die einzelnen Funktionsschritte in ihrem zeitlichen Ablauf vorzugsweise zentral von einer elektronischen Steuerung beziehungsweise Regelung (nicht dargestellt) gesteuert werden.

In Figur 4 ist die Tragschiene 7 stark schematisiert im Querschnitt dargestellt. Die Führungseinrichtungen 11 beziehungsweise 11' greifen in eine Ausnehmung 33 beziehungsweise 33' ein. Der Kombischlitten 1 kann somit beim Verlagern sicher geführt werden, wobei der Kombischlitten vorzugsweise an seiner Unterseite eine Lagervorrichtung (nicht dargestellt) aufweist, die mit einer Oberseite der Tragschiene 7 zusammenwirkt. Eine derartige Lagereinrichtung kann beispielsweise eine Gleitlagereinrichtung oder dergleichen sein.

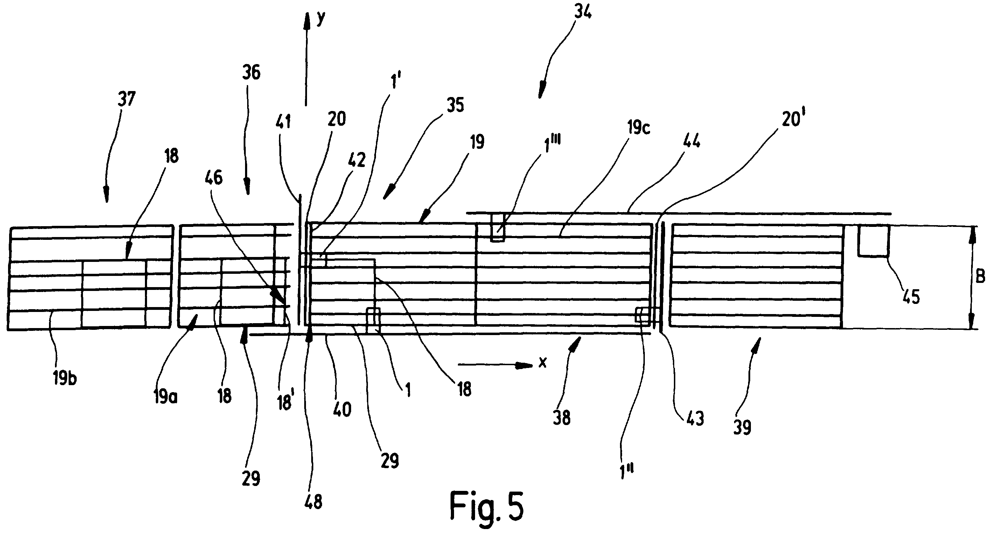

Die Figur 5 zeigt einen Beschlagverschraubautomat 34, der eine erste Verschraubstation 35 umfaßt. Vorzugsweise weist der Beschlagverschraubautomat 34 weiterhin einen Vorlegetisch 36, eine Beschlagstanze 37, eine zweite Verschraubstation 38 und einen Ablegetisch 39 auf. Diese Elemente sind dem Beschlagverschraubautomaten 34 optional zugeordnet, das heißt, daß der ersten Verschraubstation 35 zumindest eine weitere Bearbeitungsstation oder eine Kombistation aus mehreren Elementen zugeordnet sein kann.

Für die nachfolgenden Betrachtungen wird jedoch angenommen, daß der Beschlagverschraubautomat 34 die erste Verschraubstation 35, den Vorlegetisch 36, die Beschlagstanze 37, die zweite Verschraubstation 38 und den Ablegetisch 39 umfaßt.

Die erste Verschraubstation 35 weist den Auflagetisch 19, den vertikal verlagerbaren Anschlag 20, den feststehenden Anschlag 29 sowie zwei Tragschienenelemente 40 und 41 auf. Die Tragschienenelemente 40 und 41 sind vorzugsweise orthogonal zueinander dem Auflagetisch 19 zugeordnet, so daß sich das Tragschienenelement 40 in Längsrichtung des Auflagetisches 19 erstreckt; das Tragschienenelement 41 verläuft vorzugsweise rechtwinklig dazu, das heißt, es verläuft im wesentlichen parallel zu einem seitlichen Rand 42 des Auflagetisches 19. Den Tragschienenelementen 40 und 41 sind jeweils ein Kombischlitten 1 beziehungsweise 1' zugeordnet, so daß der Kombischlitten 1 in x-Richtung und der Kombischlitten 1' in y-Richtung verlagerbar ist. Das Tragelement 40 erstreckt sich insgesamt über die erste und zweite Verschraubstation 35 und 38 sowie teilweise über den Vorlegetisch 36.

Der Vorlegetisch 36 ist der ersten Verschraubstation 35 vorgeschaltet, und weist einen Auflagetisch 19a auf. Dem Vorlegetisch 36 ist die Beschlagstanze 37 vorgeschaltet. Sie weist einen Auflagetisch 19b auf. Die Beschlagstanze 37 dient vorzugsweise dazu, Beschläge an die Maße des Flügelrahmens 18 anzupassen sowie Öffnungen einzubringen, die zusammen mit Befestigungsmitteln dazu dienen, den Beschlag mit dem Flügelrahmen 18 zu verbinden, insbesondere zu verschrauben. Eine derartige Beschlagstanze 37 kann voll- oder halbautomatisch beziehungsweise manuell arbeiten.

Die zweite Verschraubstation 38 ist der ersten Verschraubstation 35 nachgeordnet. Ihr sind Tragschienenelemente 43 und 44 zugeordnet. Auf dem Tragschienenelement 43 ist ein Kombischlitten 1'' in y-Richtung verlagerbar angeordnet, wobei sich das Tragschienenelement 43 vorzugsweise über die gesamte Breite B des Auflagetisches 19c der zweiten Verschraubstation 38 erstreckt. Das Tragschienenelement 44 erstreckt sich in x-Richtung vorzugsweise über den Auflagetisch 19c sowie über den Ablegetisch 39 und trägt einen Kombischlitten 1''. Ist dem Ablegetisch 39 ein Eckbandmagazin 45 zugeordnet, so erstreckt sich das Tragschienenelement 44 auch über das Eckbandmagazin 45. Weiterhin ist der zweiten Verschraubstation 38 ein Anschlag 20' zugeordnet, der wie der Anschlag 20 in vertikaler Richtung, das heißt senkrecht zur Blattebene, verlagerbar ist.

Anhand der Figuren 5 bis 9 wird ein Funktionsablauf zur Montage von Beschlägen an einem Flügelrahmen beschrieben. Auf der Beschlagstanze 37 ist ein Flügelrahmen 18 auf dem Auflagetisch 19b aufgelegt. Der Flügelrahmen 18 ist dabei bereits so vorbereitet, daß die zu verschraubenden Beschläge auf die Länge beziehungsweise Breite des Flügelrahmens 18 angepaßt und die Öffnungen im Beschlag (nicht dargestellt) eingebracht sind. Die Beschläge und der Flügelrahmen 18 sind dabei so ausgestaltet, daß die Beschläge in entsprechende Nuten im Flügelrahmen eingesetzt und in dieser Position fixiert sind. Beispielsweise erfolgt dies dadurch, daß die Nut vorzugsweise eine Breite derart aufweist, daß der Beschlag in der Nut festgeklemmt ist.

Ein derartig vorbereiteter Flügelrahmen 18 wird dann vorzugsweise manuell von einem Maschinenführer auf den Vorlegetisch 36 verlagert. Auf dem Vorlegetisch 36 ist vorzugsweise ein opto-elektronisches Bauelement vorgesehen, so daß eine Steuereinheit (nicht dargestellt) des Beschlagverschraubautomaten erkennt, ob auf dem Vorlegetisch 36 ein Flügelrahmen 18 aufliegt.

Der Kombischlitten 1 wird daraufhin auf dem Tragschienenelement 40 in x-Richtung zum Vorlegetisch 36 verlagert. Dabei ist das Spannsystem 13 und die Spannvorrichtung 5 des Kombischlittens 1 angehoben, das heißt, die Spannrollen 14 und der Spannarm 15 sind derart verlagert, daß diese beim Überstreichen des Flügelrahmens 18 über diesen hinweggeführt werden. Hat der Kombischlitten 1 ein Rahmenteil 18' des Flügelrahmens 18 überstrichen, so wird das Spannsystem 13 abgesenkt, so daß zumindest eine Spannrolle 14 den Rahmenteil 18' an der Innenseite 46 des Flügelrahmens hintergreift. Danach setzt sich der Kombischlitten 1 in Richtung der ersten Verschraubstation 35 in Bewegung, wobei die Spannrollen 14 den Flügelrahmen 18 mitschleppen. Der Anschlag 20 ist derart abgesenkt, daß der Flügelrahmen 18 über ihn hinweggleiten kann. Beim Schleppen des Flügelrahmens 18 liegt dieser vorzugsweise an dem Anschlag 29 an, der sich vorzugsweise über den Vorlegetisch 36 und über die erste und zweite Verschraubstation 35 und 38 erstreckt. Aufgrund einer Flügelgrößen-abhängigen Steuerung des Beschlagverschraubautomaten 34 wird der Flügelrahmen 18 so weit geschleppt, bis er vollständig auf dem Auflagetisch 19 der ersten Verschraubstation 35 aufliegt. Vorzugsweise wird nun der Spannarm 15 des Spannschlittens 4 abgesenkt; der Kombischlitten 1 wird in Richtung des Vorlegetisches 36 verlagert. Gleichzeitig wird der Anschlag 20 angehoben. Der Spannfinger 16 des Spannschlittens 4 trifft bei dieser Verlagerung des Kombischlittens 1 auf den Flügelrahmen 18, der dadurch gegen den Anschlag 20 gedrängt wird. Liegt der Flügelrahmen 18 vollständig am Anschlag 20 an, so wird dies von der Steuereinheit erkannt, so daß die Verlagerungsbewegung des Kombischlittens 1 vorübergehend unterbrochen wird. Die Verklemmeinrichtung 21 des Spannschlittens 4 wird nun mit Hilfe der Betätigungseinrichtung betätigt, so daß der Spannschlitten 4 auf dem Tragschienenelement 40 festgestellt wird. Danach erfolgt die Abkopplung des Schraubschlittens 6 derart, daß die Verriegelungseinrichtung (nicht dargestellt) gelöst wird. Der Schraubschlitten 6 fährt die erste Öffnung des Beschlags an, eine Schraube wird vorzugsweise automatisch in die Öffnung eingesteckt, so daß die Schraubendrehereinheit (nicht dargestellt) eine Verschraubung des Beschlags mit dem Flügelrahmen 18 vornimmt. Der Schraubschlitten 6 arbeitet nun Öffnung für Öffnung des Beschlags ab und verschraubt dabei den Beschlag mit dem Flügelrahmen 18, und zwar bewegt sich der Schraubschlitten 6 vorzugsweise in Richtung des Vorlegetisches 36.

Während des eben beschriebenen Schleppvorgangs des Flügelrahmens 18 auf die erste Verschraubstation 35 hat sich der Kombischlitten 1' von seiner äußersten Position in Richtung des Flügelrahmens, also zum Tragschienenelement 40 hin, bewegt. Sein Spannsystem befindet sich dabei vorzugsweise in seiner angehobenen Position, so daß die Spannrollen 14 über den Flügelrahmen 18 hinweggeführt werden. Vorzugsweise ist dabei der Spannarm 15 des Kombischlittens 1' abgesenkt, so daß der Spannfinger 16 den Flügelrahmen 18 erfaßt und gegen den Anschlag 29 drückt. Ist diese Position erreicht, so wird auch hier der Spannschlitten 4 des Kombischlittens 1' arretiert und der Schraubschlitten 6 vom Spannschlitten unter Betätigung der Verriegelungseinrichtung abgekoppelt; der Schraubschlitten 6 bewegt sich anschließend vorzugsweise in einem Eilgang in Richtung auf die untere Flügelecke 48 zu. Beim Erreichen der Flügelecke 48 wird der Schraubschlitten 6 derart aktiviert, daß eine Öffnung des Beschlags angefahren, eine Schraube in die Öffnung eingesetzt wird und die Schraubendrehereinheit den Beschlag mit dem Flügelrahmen 18 verschraubt. Nachfolgend werden sämtliche Öffnungen beziehungsweise Bohrungen des Beschlags angefahren, so daß dieser an verschiedenen Stellen mit dem Flügelrahmen 18 verschraubt werden kann. Es wird also deutlich, daß die Bewegungsrichtungen der Kombischlitten 1 beziehungsweise 1' derart ablaufen, daß eine Kollision der beiden Kombischlitten 1 und 1' im Bereich der unteren Flügelecke 48 vermieden wird.

Nachdem sämtliche Verschraubarbeiten abgearbeitet wurden, befindet sich der Schraubschlitten 6 des Kombischlittens 1' wieder beim Spannschlitten 4, dieser wird angekoppelt und der gekoppelte Kombischlitten 1' in seine Grundposition verfahren. Der Kombischlitten 1 hat in der Zwischenzeit seinen Spannschlitten 4 erreicht, dieser wird ebenfalls angekoppelt und verriegelt. Anschließend wird die Verklemmeinrichtung 21 gelöst, wobei auch die Spannvorrichtung 5 angehoben wird, so daß der Spannschlitten 4 des Kombischlittens 1 wieder zusammen mit dem Schraubschlitten 6 verlagert werden kann. Das Spannsystem 13 wird dabei derart abgesenkt, daß der Flügelrahmen 18 mit Hilfe des Kombischlittens 1 in Richtung der zweiten Verschraubstation 38 geschleppt werden kann. Vorzugsweise gleichzeitig erfolgt ein Anheben des Anschlags 20', so daß der Flügelrahmen 18 nur bis zu diesem Anschlag geschleppt werden kann.

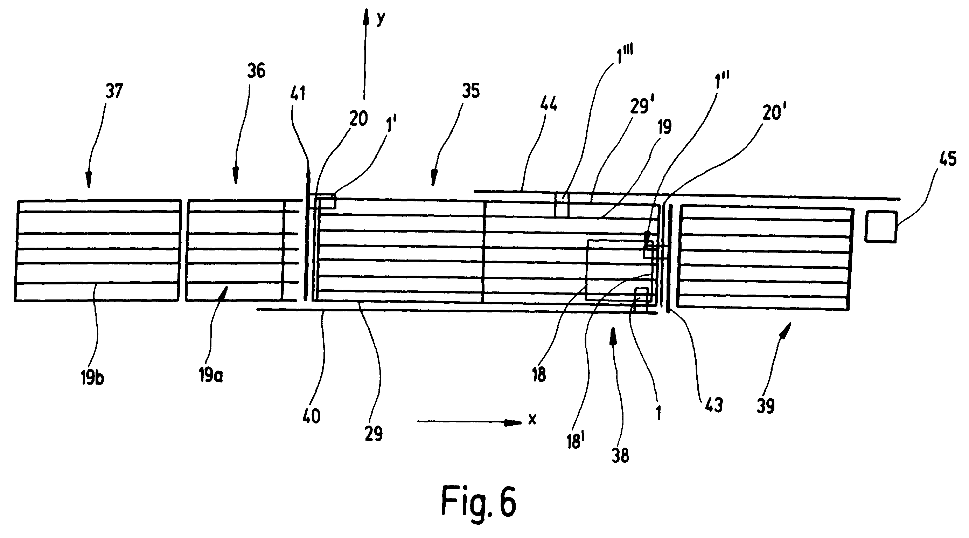

Der Flügelrahmen befindet sich dabei in einer Position, wie in Figur 6 dargestellt. Im übrigen sind hier gleiche Teile mit denselben Bezugszeichen versehen, insofern wird auf die entsprechenden Beschreibungsteile verwiesen. Nachdem der Kombischlitten 1 den Flügelrahmen 18 über die Auflagetische 19 und 19c geschleppt hat, wird sein Spannsystem angehoben, und der Kombischlitten 1 wird auf dem Tragschienenelement 40 wieder in Richtung der ersten Verschraubstation 35 verlagert.

Der Kombischlitten 1'' wird dabei in y-Richtung, also auf das Tragschienenelement 44 hin verlagert, sein Spannsystem 13 und seine Spannvorrichtung 5 sind dabei angehoben, so daß das Rahmenteil 18' des Flügelrahmens 18 unter den Spannrollen 14 und dem Spannarm 15 hindurchgeführt werden konnte. Der Kombischlitten 1'' nimmt in seiner weiteren Verlagerung durch Absenken des Spannsystems 13 den Flügelrahmen 18 so weit mit, bis er an einen Anschlag 29' herangeführt ist. Der Anschlag 29' erstreckt sich vorzugsweise über den Auflagetisch 19c und den Ablegetisch 39. Der Kombischlitten 1''' hat sich mittlerweile von seiner in Figur 5 dargestellten Position in die in Figur 6 dargestellte Position bewegt.

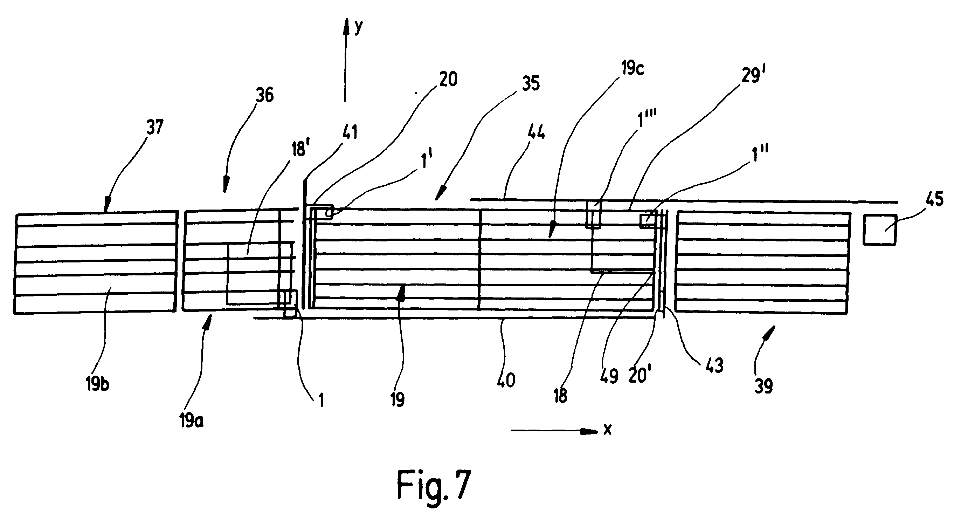

In der Figur 7 liegt der Flügelrahmen 18 am Anschlag 29' an, wobei zwischenzeitlich der Kombischlitten 1''' den Flügelrahmen 18 mit seinem Spannsystem 13 erfaßt und gegen den Anschlag 20' gedrängt hat, der in seiner Höhe verlagert ist.

Der Kombischlitten 1'' hat im Verlauf seiner Bewegung seinen Spannschlitten 4 abgekoppelt, so daß eine Fixierung an einer Rahmenkante 49 des Flügelrahmens 18 gegenüber dem Anschlag 29' erfolgt.

Der Kombischlitten 1''' befindet sich in einer Position, in der der Spannschlitten 4 mit seinem Spannarm 15 am Flügelrahmen 18 anliegt, wobei nun die Abkopplung des Spannschlittens 4 vom Schraubschlitten 6 erfolgt. Nachdem also der Flügelrahmen 18 auf der zweiten Verschraubstation 38 fixiert wurde, werden die noch zu bearbeitenden Seiten des Flügelrahmens 18 mit Hilfe der Schraubschlitten der Kombischlitten 1'' und 1''' mit dem Flügelrahmen verschraubt.

In der Zwischenzeit wurde auf dem Vorlegetisch 36 ein weiterer Flügelrahmen 18' abgelegt, der vom Kombischlitten 1 bereits erfaßt wurde und nun auf den Auflagetisch 19 geschleppt wird.

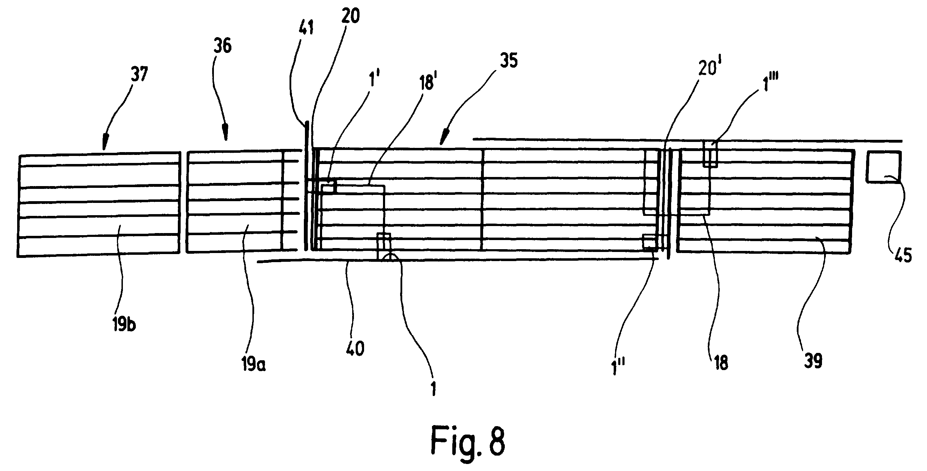

In Figur 8 befindet sich der Flügelrahmen 18' in der eben beschriebenen Position, wobei hier bereits angenommen wird, daß die Spannschlitten der Kombischlitten 1 beziehungsweise 1' ihre Spannstellung bereits erreicht haben, so daß die Schraubschlitten von den Spannschlitten abgekoppelt werden können und die Verschraubung der Beschläge mit dem Flügelrahmen 18', wie bereits eingangs für den Flügelrahmen 18 beschrieben, erfolgen kann.

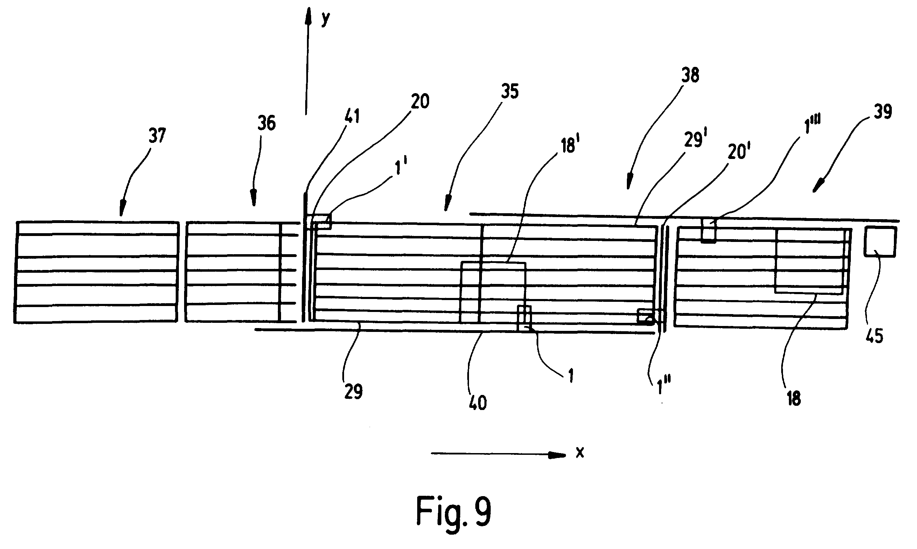

Die Beschlagteile wurden zwischenzeitlich mit dem Flügelrahmen 18 verschraubt, die Schraubschlitten 6 sind bereits wieder an den Spannschlitten 4 der Kombischlitten 1'' und 1''' angekoppelt, der Anschlag 20' wurde abgesenkt und der Kombischlitten 1'' wurde derart verlagert, daß der Flügelrahmen 18 mit Hilfe des Kombischlittens 1' beziehungsweise dessen Spannrollen 14 zum Ablegetisch 39 geschleppt werden kann, und zwar so weit, wie in Figur 9 dargestellt. Der Flügelrahmen 18 befindet sich in einer Position nahe des Eckbandmagazins 45. Vorzugsweise weist der Kombischlitten 1''' eine Einrichtung zur Montage eines Eckbands (nicht dargestellt) auf, mit Hilfe derer aus dem Eckbandmagazin ein Eckband (nicht dargestellt), insbesondere ein Scharnier, entnommen werden kann. Dieses wird von der Einrichtung zur Montage eines Eckbands auf dem Flügelrahmen 18 aufgesetzt, mit dem Flügelrahmen 18 verbohrt und anschließend verschraubt. Alternativ kann vorgesehen sein, daß diese Einrichtung dem Eckbandmagazin 45 zugeordnet ist. Nachdem ein Eckband montiert wurde, kann der Flügelrahmen 18 vom Ablegetisch entnommen und in einem Magazin (nicht dargestellt) abgelegt werden. Dies erfolgt manuell oder automatisch beziehungsweise halbautomatisch.

Wie in der Figur 9 dargestellt, befindet sich der Flügelrahmen 18', nachdem die Beschlagteile vom Kombischlitten 1 und 1' verschraubt wurden, bereits in Zuführposition zur zweiten Verschraubstation 38, an der die weiteren Beschlagteile mit dem Flügelrahmen 18 verschraubt werden, wie dies bereits im Zusammenhang mit dem Flügelrahmen 18 beschrieben wurde. Weiterhin kann selbstverständlich vorgesehen sein, daß an den Flügelrahmen 18' ein Eckband montiert wird.

Selbstverständlich können bereits weitere Flügelrahmen auf der Beschlagstanze 37 und/oder dem Vorlegetisch 36 zur Montage liegen.

Nach alledem wird deutlich, daß mit der erfindungsgemäßen Vorrichtung ein Flügelrahmen an seinen Seiten mit einem Beschlag versehen werden kann, ohne den Flügelrahmen zu drehen, andererseits wird für den Schleppvorgang des Flügelrahmens keine zusätzliche Fördereinrichtung benötigt, da der Kombischlitten 1, insbesondere das Spannsystem 13 des Kombischlittens 1 beziehungsweise 1'' auch eine Fördereinrichtung aufweisen kann.

Ferner zeichnet sich die erfindungsgemäße Vorrichtung dadurch aus, daß zumindest ein Eckband mittels einer den Kombischlitten 1 zugeordneten Einrichtung (Kombischlitten 1'') montiert werden kann.

## Patentansprüche

1. Vorrichtung zur Verschraubung von zumindest einem Beschlagteil mit einem Flügelrahmen (18) eines Fensters, einer Tür oder dergleichen, mit einem Auflagetisch (19), mit einem linear zum Auflagetisch verlagerbaren, eine Schraubendrehereinheit (60) aufweisenden Schraubschlitten (1; 6), wobei die Schraubendrehereinheit (60) relativ zum Schraubschlitten (1; 6) verlagerbar ist, und mit einer den Flügelrahmen (18) spannenden Spannvorrichtung (5), dadurch gekennzeichnet, daß die Spannvorrichtung (5) dem Schraubschlitten (1;6) zugeordnet ist.

2. Vorrichtung nach Anspruch 1, dadurch gekennzeichnet, daß eine Tragschiene (7) vorgesehen ist, die parallel zu dem Auflagetisch (19) angeordnet ist und den Schraubschlitten (6) trägt.

3. Vorrichtung nach Anspruch 1 oder 2, dadurch gekennzeichnet, daß der Schraubschlitten aus zwei koppelbaren Einzelschlitten (2, 3) aufgebaut ist, von denen der erste (2) eine spannende Funktion und der zweite Einzelschlitten (3) eine verschraubende Funktion hat.

4. Vorrichtung nach Anspruch 3, dadurch gekennzeichnet, daß der erste Einzelschlitten (2) eine Klemmeinrichtung aufweist, die ein Festlegen des ersten Einzelschlittens (2), vorzugsweise an der Tragschiene, erlaubt.

5. Vorrichtung nach einem der vorhergehenden Ansprüche, dadurch gekennzeichnet, daß eine Zahnstange (10) ortsfest angeordnet ist, die mit einem an dem Schraubschlitten (6) vorgesehenen Zahnrad (9) kämmt, um eine Verlagerung des Schraubschlittens (6) zu ermöglichen.

6. Vorrichtung nach Anspruch 4 oder 5, dadurch gekennzeichnet, daß die Klemmeinrichtung (24) ein Zahnrad (25) aufweist, das mit einer ortsfest angeordneten Zahnstange (10; 26) kämmt und zum Festlegen des ersten Einzelschlittens (2) unverdrehbar feststellbar ist.

7. Vorrichtung nach einem der vorhergehenden Ansprüche, dadurch gekennzeichnet, daß der Schraubschlitten (6; 3) ein bezüglich des Schraubschlittens in zwei Richtungen verstellbares Spannsystem (13, 14) aufweist.

8. Vorrichtung nach einem der vorhergehenden Ansprüche, dadurch gekennzeichnet, daß die Spannvorrichtung (5) einen Spannarm (15) und einen daran angebrachten Spannfinger (16) aufweist, der mit dem einzuspannenden Flügelrahmen (18) zusammenwirkt.

9. Vorrichtung nach einem der vorhergehenden Ansprüche, dadurch gekennzeichnet, daß der Vorrichtung ein weiterer Schraubschlitten (1') zugeordnet ist.

10. Vorrichtung nach Anspruch 9, dadurch gekennzeichnet, daß der zweite Schraubschlitten (1') im wesentlichen rechtwinklig zur Verlagerungsrichtung des ersten Schraubschlittens (1) relativ zum Auflagetisch (19) verlagerbar ist, so daß gleichzeitig ein zweites Beschlagteil mit dem Flügelrahmen (18) verschraubbar ist.

11. Vorrichtung zur Verschraubung von zumindest einem Beschlagteil mit einem Flügelrahmen (18) eines Fensters, einer Tür oder dergleichen, mit einem Auflagetisch (19), mit einem linear zum Auflagetisch verlagerbaren, eine Schraubendrehereinheit (60) aufweisenden Schraubschlitten (1; 6), wobei die Schraubendrehereinheit (60) relativ zum Schraubschlitten (6) verlagerbar ist, und mit einer den Flügelrahmen spannenden Spannvorrichtung (5), dadurch gekennzeichnet, daß die Vorrichtung zwei Arbeitsstationen (35, 36, 37, 38, 39) und eine Transporteinrichtung (1) zum Verlagern des Flügelrahmens von der ersten Arbeitsstation (35) zur zweiten Arbeitsstation (38) aufweist.

12. Vorrichtung nach Anspruch 5, dadurch gekennzeichnet, daß die Transporteinrichtung dem Schraubschlitten (6) zugeordnet ist.

13. Vorrichtung zur Verschraubung von zumindest einem Beschlagteil mit einem Flügelrahmen (18) eines Fensters, einer Tür oder dergleichen, mit einem Auflagetisch (19), mit einem linear zum Auflagetisch (19) verlagerbaren, eine Schraubendrehereinheit (60) aufweisenden Schraubschlitten (1; 6), wobei die Schraubendrehereinheit relativ zum Schraubschlitten verlagerbar ist, und mit einer den Flügelrahmen spannenden Spannvorrichtung (5), gekennzeichnet durch eine Einrichtung zur Montage eines Eckbands, die dem Schraubschlitten zugeordnet ist.
